# FASCICULE DE BREVET EUROPEEN

(11) **EP 3 134 323 B1**
(45) Date de publication et mention de la délivrance du brevet: **06.06.2018**
(21) Numéro de dépôt: 15728135.3
(22) Date de dépôt: 24.04.2015
(51) Int. Cl.: B65B 23/08, A01K 43/00

(54) **PROCÉDÉ ET INSTALLATION DE REMPLISSAGE DE CASIERS D'OEUFS EN DÉFILEMENT**
VERFAHREN UND ANLAGE ZUR BEFÜLLUNG SICH BEWEGENDER EIERREGALE
METHOD AND FACILITY FOR FILLING TRAVELLING EGG RACKS

(30) Priorité: 24.04.2014 FR 1400971
(43) Date de publication de la demande: 01.03.2017
(73) Titulaire: Zoetis Services LLC, Parsippany, NJ 07054 (US)
(72) Inventeur: ROBERT, Pierre, F-49300 Cholet (FR); ROBERT, Franck, F-49300 Cholet (FR)
(74) Mandataire: Mannion, Sally Kim
(86) Numéro de dépôt international: PCT/IB2015/000577
(87) Numéro de publication internationale: WO 2015/162489

(56) Documents cités:
- EP-A1- 2 377 393
- FR-A1- 2 912 600
- JP-A- 2000 128 124
- US-A- 5 898 488

## Description

La présente invention concerne un procédé et une installation de remplissage de casiers d'oeufs successifs sur une ligne de casiers d'oeufs en défilement. En ses caractéristiques essentielles elle porte plus particulièrement sur l'opération que les gens de métier appellent " retassage ", qui consiste à compléter le taux de remplissage des casiers en repérant lesquels des emplacements récepteurs d'oeufs sont vides d'oeuf dans le casier en cours (également dit casier courant) et en y déposant des oeufs qui sont prélevés dans une réserve d'oeufs disponibles. Cette réserve est située hors de la ligne de défilement des casiers successivement soumis aux opérations de retassage. Elle peut être constituée à partir des oeufs présents dans un casier déterminé de la chaîne que l'on aura sélectionné en amont du poste de retassage de l'installation et que l'on aura destiné à être vidé de ses oeufs pour cet usage.

On notera qu'à ce stade les oeufs traités ne sont pas identifiés autrement que comme des objets discrets qui se présentent répartis dans des casiers les véhiculant. Ce n'est que quand on considère les conditions d'application préférées de mise en oeuvre de l'invention que la notion d'oeufs prend une signification plus précise, en désignant des objets fragiles qui, comme les oeufs de volailles, demandent à être manipulés avec précaution, correctement rangés en position stable dans les casiers qui les regroupent. On sait en outre que les oeufs de volailles sont traités en chaîne en nombre très important et à cadence élevée, ce qui peut justifier d'avoir recours à des moyens élaborés qui n'auraient pas d'utilité rentable dans d'autres applications.

L'invention s'intéresse plus particulièrement, bien que non limitativement, aux applications dans lesquelles les opérations de retassage interviennent, dans un procédé industriel plus complet, après une étape antérieure de contrôle d'état des oeufs individuels conduisant à extraire de chaque casier des oeufs jugés non valides et impropres à la destination ultérieure des oeufs jugés valides restant dans chaque casier. On procède notamment dans des machines dites à mirer les oeufs, pour détecter par visiométrie si chacun des oeufs présents dans le casier en cours à chaque cycle de traitement des casiers successifs en défilement est ou non fécondé et pour retirer du process les oeufs non fécondés, considérés comme non valides pour traitement ultérieur au motif, par exemple, qu'il est inutile de les envoyer vers les destinations réservées aux oeufs fécondés, telles les éclosoirs où naîtront des poussins. D'autres vérifications de conformité peuvent porter sur la forme géométrique extérieure des oeufs.

D'où l'intérêt de procéder à une étape de retassage permettant de compléter le taux de remplissage des casiers avant de les envoyer à leur destination ultérieure. Un haut degré de complétude des casiers est particulièrement souhaitable lorsque les oeufs fécondés sont destinés à être utilisés dans des installations où ils reçoivent un produit tel qu'un vaccin qui leur est administré par injection. Il peut s'agir soit de vacciner les oeufs soit d'utiliser les oeufs individuels comme milieu de culture pour la croissance d'un vaccin. Il est important que les casiers passant dans la machine à traiter les oeufs soient complets, tout en contenant uniquement des oeufs jugés valides, de manière à éviter qu'une dose de vaccin soit gaspillée ou utilisée à mauvais escient, dès lors que l'injection se réalise indifféremment dans chaque emplacement récepteur d'oeuf du casier, donc même dans les emplacements vides.

L'état de la technique en la matière est illustré notamment par les documents de brevet FR 2 912 600, US5 898 488, EP2 377 393. Le besoin de procéder à des opérations de retassage pour parfaire le remplissage du casier en cours à chaque cycle de traitement des casiers successifs de la ligne de traitement étant en soi connu, la présente invention s'intéresse spécialement à la manière dont on prélève des oeufs valides dans une réserve d'oeufs disponibles à cet effet et dont on assure leur transfert pour rechargement du casier en cours en ses emplacements vides d'oeuf.

Elle prévoit d'automatiser ces opérations en agissant non pas sur la commande d'outils individuels de transfert propres à chaque oeuf entre la réserve d'oeufs disponibles dans laquelle il est prélevé et un emplacement vide du casier en cours dans lequel il est déposé, mais sur la commande des éléments mécaniques d'un réservoir d'oeufs disponibles spécialement conçu. Elle permet par là d'assurer que les emplacements récepteurs d'oeuf des différents casiers soient correctement remplis, notamment en conformité avec des prescriptions déterminées concernant le taux de remplissage de chaque casier, de manière efficace et fiable, sans perte de temps dans la cadence de traitement des casiers en ligne. Elle conduit aussi à assurer un tel « retassage » en évitant d'avoir recours à du matériel qui serait complexe, coûteux, difficile à installer ou posant des problèmes d'entretien.

L'invention a pour objet un procédé suivant la revendication 1; et a également pour objet une installation de remplissage de casiers successifs en défilement, suivant la revendication 11, dans laquelle un réservoir d'oeufs disponibles pour chargement d'emplacements vides d'oeufs dans un casier en cours de retassage est constitué d'alvéoles chacune réceptrice d'un oeuf qui sont individuellement mobiles sous la commande d'un dispositif de pilotage qui commande automatiquement leur déplacement pour les amener dans une configuration de réservoir elle-même établie automatiquement en fonction de l'état de remplissage du casier en cours repérant la répartition des emplacements vides par rapport aux emplacements pleins. La mise en place des alvéoles porteuses d'oeufs dans ladite configuration de réservoir préalablement au prélèvement des oeufs qu'elles contiennent peut avantageusement se faire rangée par rangée dans un réservoir où les alvéoles sont disposées en rangées parallèles et où, dans chaque rangée, elles sont montées à coulissement l'une à la suite de l'autre le long d'un rail de guidage de leur déplacement.

Selon une caractéristique particulièrement intéressante de l'invention, on peut prévoir dans le procédé d'alimenter ponctuellement le réservoir en oeufs valides par l'ensemble des oeufs d'un des casiers en défilement, sélectionné à cet effet en amont du poste de retassage. On s'assure ainsi que le réservoir ait suffisamment d'oeufs pour compléter correctement les casiers successifs dans le circuit de défilement et l'on réalise ce remplissage en utilisant l'un des casiers, que l'on vide complètement avant de l'évacuer de la ligne de traitement. Selon une caractéristique avantageuse de l'invention, le procédé peut d'autre part comporter une étape de redistribution des oeufs disponibles dans le réservoir par prélèvement d'un nombre déterminé d'oeufs dans les alvéoles d'une rangée du réservoir dont on a déterminé automatiquement qu'elle est plus fournie pour déposer les oeufs ainsi prélevés dans les alvéoles d'une rangée du réservoir dont on a déterminé automatiquement qu'elle est moins fournie.

Les moyens de transfert des oeufs entre la ligne principale de traitement des casiers successifs et le réservoir peuvent notamment consister en un plateau à ventouses, à savoir un plateau comportant des moyens de préhension individuelle des oeufs qui sont répartis en autant de lignes et de colonnes que chacun des casiers successifs en défilement comporte d'emplacements ou alvéoles de réception d'un oeuf.

Le déplacement et la répartition des alvéoles dans le réservoir peuvent avantageusement être réalisés au moyen d'un peigne à dents rétractables se disposant suivant une ligne d'entraînement en travers des rangées d'alvéoles. Un tel peigne sera décrit plus loin comme comportant un bras porteur des dents rétractables qui est monté mobile dans la direction définie par les rangées d'alvéoles dans le réservoir et qui est muni de doigts constituant les dents rétractables, chacun mobile entre une position déployée où il est actif en entraînement d'une alvéole du réservoir avec laquelle il est amené à coopérer et une position rétractée dans laquelle il est rendu inactif, notamment par le fait qu'il s'efface en retrait de toutes les alvéoles en regard desquelles il passe quand le peigne parcourt l'ensemble dans un mouvement de va-et-vient d'une extrémité à l'autre du réservoir.

Selon une forme de réalisation particulière d'un tel réservoir à alvéoles mobiles, chaque alvéole est réalisée sous la forme d'une cuvette creusée dans un boîtier qui présente des parois latérales plates et parallèles propres à venir en butée chacune, de part et d'autre de la cuvette dans laquelle se dépose un oeuf, avec un face homologue d'un boîtier d'alvéole adjacent. Les alvéoles sont ainsi accolées en butée l'une sur l'autre dans chaque rangée. Par ailleurs, chaque boîtier d'alvéoles présente une patte d'entraînement avec laquelle les dents du peigne peuvent venir en prise en se plaçant soit devant soit derrière elle, le choix étant commandé automatiquement suivant le sens de déplacement du peigne pour que l'alvéole entraînée pousse avec elle les autres alvéoles de la même rangée.

Selon d'autres caractéristiques de l'invention, les rangées d'alvéoles réceptrices d'oeufs disponibles comportent un nombre d'alvéoles supérieur au nombre d'emplacements récepteurs d'oeufs dans chaque ligne d'un casier. Le réservoir peut ainsi comporter une zone de stockage d'alvéoles servant au rechargement du réservoir quand il est périodiquement alimenté en oeufs neufs, cette zone de stockage étant distincte d'une zone de chargement, ou zone de transfert, dans laquelle les oeufs présentés disponibles après déplacement des alvéoles dans la configuration voulue seront prélevés pour transfert vers le casier en cours de traitement au poste de retassage et déposés dans ses emplacements vides de ce casier.

L'invention sera maintenant plus complètement décrite dans le cadre de caractéristiques préférées et de leurs avantages, présentés ici dans l'une de ses applications possibles, avec des oeufs, en faisant référence aux figures 1 à 9, dans lesquelles :
- la figure 1 est une représentation schématique de l'installation de retassage, ici disposée entre un poste de mirage par visiométrie, en sortie duquel on retire les oeufs non valides, et un poste d'injection de vaccins dans les oeufs présents dans les casiers ;
- la figure 2 est une vue de détail du réservoir de l'installation illustrée sur la figure 1, dans laquelle sont représentées partiellement deux alvéoles d'une même rangée et les moyens d'entraînement associés, ces moyens étant illustrés avec des doigts en position déployée d'entraînement et des doigts en position rétractée inactive en entraînement ;
- la figure 3 est un diagramme illustrant l'enchaînement des étapes du procédé de retassage selon l'invention, sur lequel on a représenté en pointillés des étapes de procédé lorsque l'installation est équipée de moyens de transfert additionnels, dans un deuxième mode de réalisation de l'installation ;
- et les figures 4 à 9 sont des illustrations des étapes du procédé selon l'invention, avec :

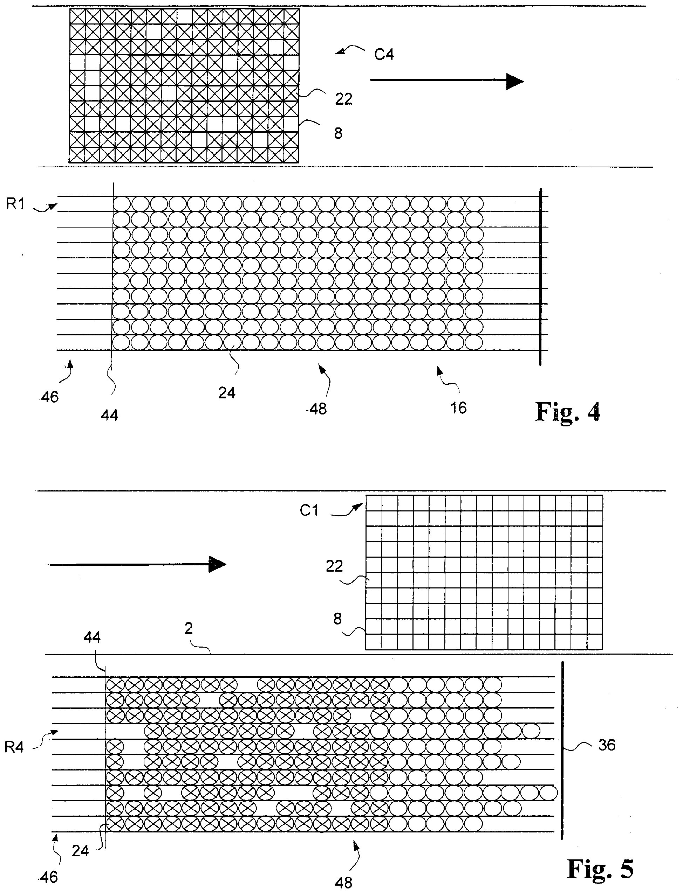

   les figures 4 et 5 qui illustrent l'alimentation initiale du réservoir,

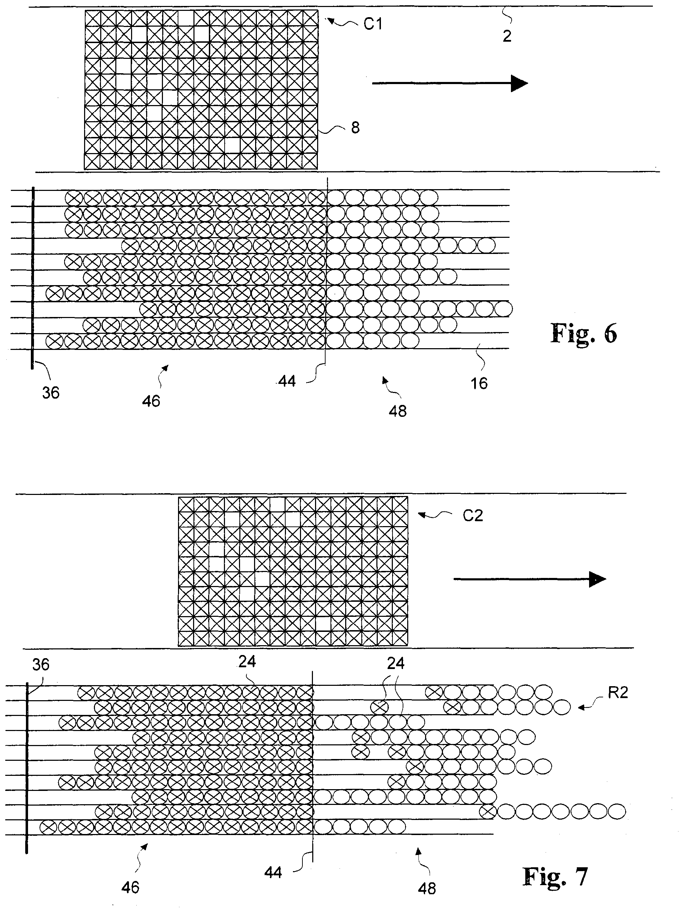

   les figures 6 et 7 qui illustrent un cas classique de remplissage d'un casier par des oeufs du réservoir,

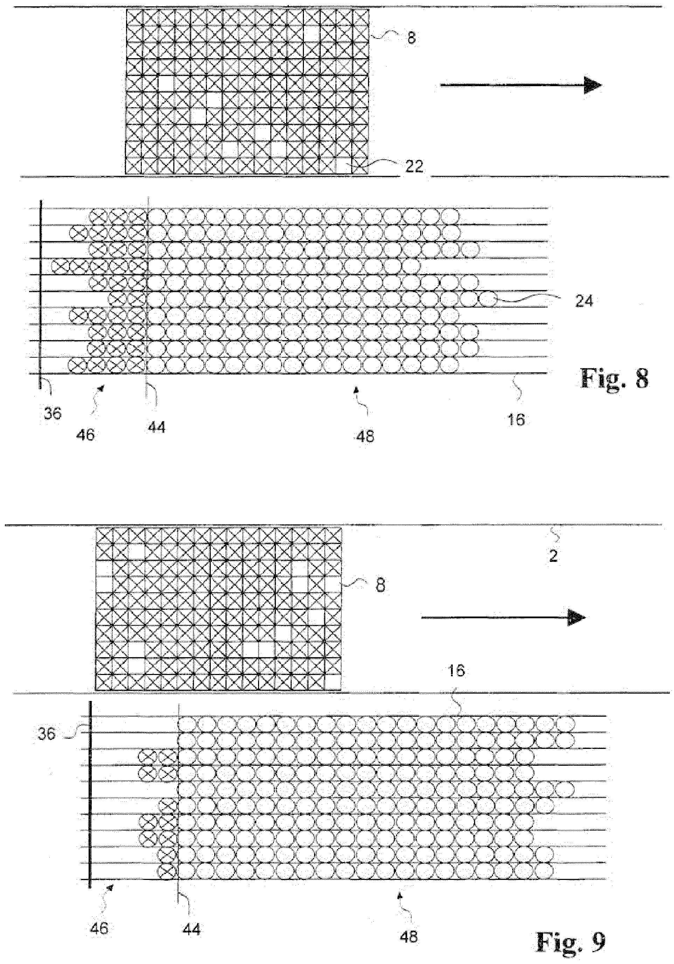

   et les figures 8 et 9 qui illustrent les conditions de réalimentation du réservoir,
   la figure 8 correspondant à un cas où le réservoir n'est pas réalimenté tandis que la figure 9 illustre à l'inverse un cas où le réservoir va être alimenté.

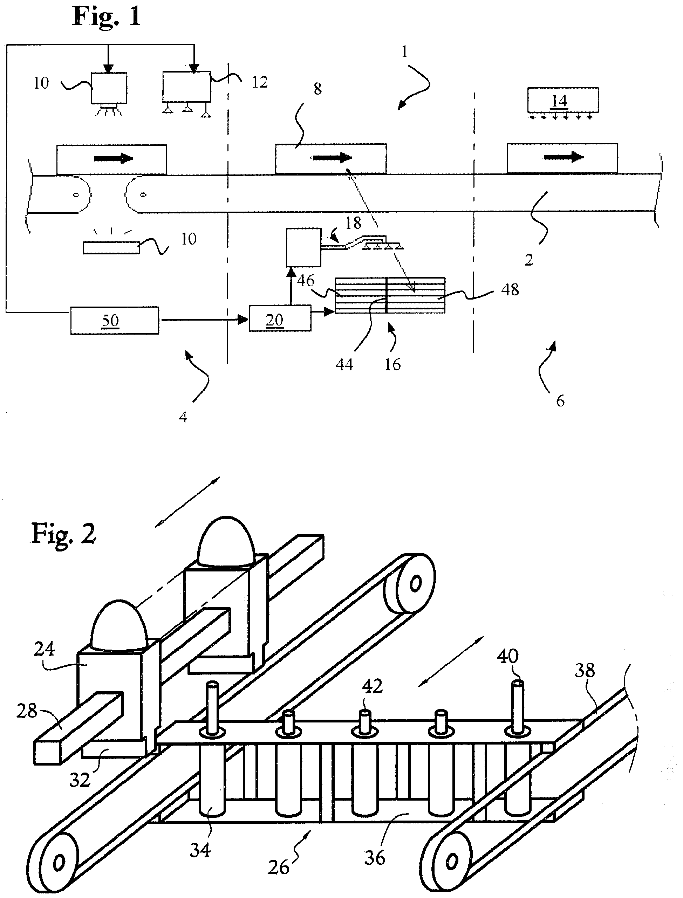

Dans une installation selon l'invention telle que celle illustrée en exemple sur la figure 1, le poste de retassage 1 est disposé sur le chemin d'un convoyeur 2, entre un poste de traitement antérieur des oeufs illustré par un poste de mirage 4 et un poste de traitement ultérieur des oeufs illustré par un poste d'injection de vaccin 6. Les casiers d'oeufs 8 sont entraînés par le convoyeur à défiler, les uns à la suite des autres, du poste de mirage à l'entrée du poste de retassage et de la sortie de celui-ci vers le poste d'injection. Le poste de mirage comporte ici des moyens d'examen par visiométrie 10 et des moyens de saisie 12 pour retirer du casier passé devant les moyens d'examen les oeufs jugés non valides. Le poste de traitement comporte pour sa part des moyens d'injection 14 propres à pénétrer dans chaque oeuf individuellement, par exemple des aiguilles d'inoculation d'une semence de vaccin présentes en nombre et disposition correspondant à celle des emplacements d'oeufs dans un casier, l'ensemble étant porté par une rampe télécommandée.

On va décrire plus en détails le poste de retassage, spécifique à l'invention, en ce qu'il comporte un réservoir 16 d'oeufs de recharge, qui est disposé en parallèle du convoyeur et dans lequel on prévoit de rendre disponibles des oeufs valides pour les utiliser en remplissage de chacun des casiers admis successivement dans le poste de retassage, ainsi qu'un plateau de transfert 18, apte à transférer des oeufs entre le réservoir et les casiers défilant le long de la ligne de convoyage, et un poste de pilotage 20, dit ici à moyens logiciels par le fait qu'il assure le pilotage du plateau de transfert dans les opérations de prélèvement d'oeufs, de déplacement et de libération des oeufs, sous la commande automatique de moyens logiciels constitués par des programmes d'ordinateur gérant les différentes opérations pour piloter le déplacement plateau en fonction d'informations relatives au remplissage des casiers défilant sur le convoyeur.

Le convoyeur est classique et il consiste par exemple en un tapis roulant sans fin, pour le transport de casiers, le tapis desservant successivement les différents postes de l'installation. On s'intéresse ici à la partie du convoyeur formant chemin de défilement entre le poste de mirage et le poste de traitement à travers le poste de retassage pour le traitement de chaque casier en cours dans la suite des casiers défilant au poste de retassage.

Des casiers 8 sont disposés sur le convoyeur et ils défilent d'un poste à l'autre, avantageusement avec une même fréquence établie entre chaque passage. Les casiers présentent des emplacements d'oeufs 22, chacun creusé en cuvette pour recevoir un oeuf, les différents emplacements étant disposés en damier de rangées et lignes orthogonales, avec Xc lignes de Yc emplacements. Dans chaque casier en cours admis au poste de retassage, certains emplacement se trouvent vides, en particulier suite à des opérations de mirage dans laquelle des oeufs non valides ont été identifiés et retirés du casier. La répartition des emplacements entre emplacements décelés comme étant vides et emplacements pleins où un oeuf est présent, est enregistrée sous la forme d'un état de remplissage qui est propre à chaque casier et différent de l'état de remplissage du casier précédent et de celui du casier suivant.

Le réservoir 16 se situe en parallèle du convoyeur, c'est-à-dire qu'il n'est pas disposé en ligne sur le circuit de convoyage, mais latéralement hors de ce circuit, dans une position adaptée au transfert des oeufs du réservoir vers un casier de la ligne de traitement ou inversement. Le réservoir comporte des alvéoles mobiles 24 qui sont réalisées chacune sous la forme d'un boîtier d'alvéole en forme de pavé à parois latérales planes creusé d'une cuvette réceptrice d'un oeuf et auxquelles il est associé un dispositif de pilotage commandant automatiquement des moyens d'entraînement 26 assurant le déplacement des différentes alvéoles.

Le réservoir est composé de Xr rangées de Yr alvéoles, et l'on définit le nombre de rangées du réservoir comme un nombre au moins égal au nombre de lignes du casier, et le nombre d'alvéoles par rangée comme un nombre au moins égal, mais de préférence supérieur au nombre d'emplacements par ligne. Dans le cas illustré, on choisit avantageusement un nombre Xc de lignes égal au nombre Xr de rangées, de manière à faire correspondre facilement la n-ième ligne du casier avec la n-ième rangée du réservoir. Ce nombre est ici arbitrairement égal à dix. Par ailleurs, dans les cas illustrés, on choisit d'avoir un réservoir constitué d'environ 33 % de plus d'alvéoles qu'il n'y a d'emplacements d'oeufs dans un casier, de sorte que l'on ait par exemple vingt alvéoles par rangée dans le réservoir pour seulement quinze emplacements par ligne dans chaque casier.

Tel qu'il est illustré sur la figure 2, les alvéoles sont portées par des rails 28 de guidage de leurs déplacements sur lesquels elles coulissent sous l'effet des moyens d'entraînement commandés par le poste de pilotage. A chaque rangée d'alvéoles dans le réservoir correspond un rail de guidage sur lequel sont montées en série les Yr alvéoles de la rangée. Sous le boîtier de chaque alvéole 24, il est prévu une patte 32 en saillie verticale du boîtier, perpendiculairement à l'axe du rail de guidage. Cette patte peut s'étendre sur toute la largeur du boîtier d'alvéole, mais dans le mode de réalisation préféré de l'invention tel que décrit en exemple ici, on a surtout prévu que le boîtier d'alvéole présente là une diminution de section dans la direction longitudinale, en formant un épaulement à l'arrière et un autre à l'avant, de manière à ce que, lorsque les alvéoles sont plaquées en série les unes contre les autres dans la rangée, un dégagement soit formé entre les alvéoles pour permettre à un doigt d'entraînement de venir s'insérer entre elles.

Des moyens d'entraînement 26 des alvéoles des différentes rangées s'étendent sous l'ensemble de ces alvéoles. Ils comportent un dispositif à vérin 34 pour chaque rangée d'alvéoles, l'ensemble de ces dispositifs étant porté par un bras les supportant 36 qui s'étend en travers des rails de guidage 28. Ce bras support est ici porté à ses extrémités latérales par deux moyens d'entraînement à courroie 38, de sorte que le bras peut se déplacer longitudinalement sous les rangées d'alvéoles. Les moyens d'entraînement sont motorisés et commandés automatiquement de manière à se déplacer dans un mouvement de translation en va-et-vient, d'une extrémité à l'autre des différentes rangées d'alvéoles.

Le bras 36 porte donc une pluralité de dispositifs à vérin, dont l'actionnement est piloté par les moyens logiciels du dispositif de pilotage associé au poste de retassage. Lorsque le dispositif à vérin est actionné dans le sens du déploiement, la tige du vérin 40 se déploie jusqu'à prendre une position déployée dans laquelle l'extrémité libre de la tige, ci-après appelée doigt 42, s'étend à hauteur de l'extrémité inférieure des alvéoles. Le déplacement du bras lorsqu'un dispositif à vérin est ainsi déployé génère le contact du doigt correspondant avec une alvéole, ou plus exactement avec la patte d'entraînement qui dépasse en saillie du boîtier d'électrode.

On comprend ainsi que lorsque les moyens d'entraînement se déplacent sous les alvéoles, les doigts des dispositifs à vérin ne touchent pas les alvéoles lorsque les dispositifs à vérins sont en position rétractée, et que si un dispositif à vérin est en position déployée (visible sur la figure 2 pour le dispositif à vérin associé à la rangée sur laquelle des alvéoles ont été représentées), le doigt correspondant pousse l'alvéole contre laquelle il est au contact. Tant que le doigt reste au contact de l'alvéole, les moyens d'entraînement poussent cette alvéole ainsi que l'ensemble des alvéoles situées en aval sur cette rangée, qui vont donc également se déplacer le long du rail; alors que les alvéoles en amont ne bougent pas.

Lorsque le dispositif à vérin associé à une rangée est rétracté, le doigt n'est plus en travers des pattes en saillie des alvéoles de cette rangée et il ne réalise plus la fonction d'entraînement de ces alvéoles. Celles-ci s'arrêtent et conservent la place qui est la leur au moment du retrait du dispositif à vérin. On comprend que les alvéoles sont liées au rail de guidage par une liaison coulissante déterminée de telle sorte que les alvéoles puissent glisser sur leur rail correspondant lorsqu'elles sont poussées par les moyens d'entraînement, mais qu'elles puissent également s'arrêter aussitôt que le dispositif à vérin se rétracte et que le doigt correspondant cesse de les pousser. On pourra prévoir par exemple des matériaux spécifiques, qui présentent un coefficient de frottement permettant un tel effet de retenue mécanique.

Tel qu'illustré sur les figures 6 à 9, on peut distinguer dans le réservoir deux zones distinctes, séparées par une ligne de démarcation 44 qui s'étend virtuellement en travers des rangées du réservoir. Une première zone consiste en une zone de stockage 46, dans laquelle les alvéoles sont poussées concentrées les unes contre les autres, et une deuxième zone consiste en une zone de chargement 48, ou zone de transfert, dans laquelle les oeufs qui y sont rendus disponibles seront prélevés pour transfert dans le casier en cours dans le poste de retassage, et dans laquelle les alvéoles sont agencées, rangée par rangée, non nécessairement accolées en butée les unes sur les autres, de manière à former une image miroir négative du casier admis au poste de remplissage sur le convoyeur, tel que cela sera décrit ci-après. On dimensionne le réservoir de sorte que chacune de ces zones puisse s'étendre en longueur sur une distance équivalente à celle des Yc emplacements du casier.

Selon le sens de défilement du casier, on dispose la zone de transfert et la zone de stockage d'un côté ou de l'autre de la ligne de démarcation et on calibre les moyens d'entraînement et les moyens de transfert en fonction de cette disposition des zones, étant entendu qu'il convient que le plateau de transfert saisisse les oeufs dans la zone de transfert. Dans les exemples illustrés, où les casiers défilent de la gauche vers la droite, la zone de transfert, est disposée à droite de la ligne de démarcation.

Le plateau de transfert des oeufs saisit tous les oeufs qui lui sont présentés, sans aucune sélectivité, que ce soit dans la zone de transfert du réservoir, ou dans un casier déterminé de la ligne de traitement. Il consiste en un plateau porteur d'outils de préhension des oeufs, en nombre égal au nombre d'emplacements récepteurs d'oeufs dans chaque casier, et agencés à l'identique de l'agencement des emplacements récepteurs d'oeufs du casier, ici en damier. Ici, les outils de préhension consistent en des ventouses, toutes reliées en même temps soit à une pompe à vide que l'on actionne pour saisir les oeufs, soit alternativement à un circuit d'admission d'air comprimé dans les ventouses pour libérer les oeufs et les déposer à leur destination suivante. Ces moyens de préhension sont en soi connus et ils ne seront pas décrits plus en détails ici. On soulignera toutefois que ce genre de plateau à ventouses a l'intérêt, dans le cadre de la mise en oeuvre de la présente invention, d'être classiquement constitué sous une forme intégrant des moyens de commande des ventouses qui agissent individuellement sur chaque ventouse en ouverture ou fermeture de la fonction de préhension. Dans ce cas, l'invention prévoit de gérer la commande des ventouses à partir de l'information de configuration de réservoir telle qu'elle est élaborée en fonction de la configuration du casier en cours à remplir en tenant compte de la disponibilité des oeufs présents dans le réservoir à chaque cycle de remplissage de casier.

Le plateau de transfert est associé à des moyens logiciels de commande automatique 20, qui déterminent dans quel sens doit s'effectuer le transfert des oeufs, c'est-à-dire s'il s'agit de saisir des oeufs du casier en cours de traitement pour les déposer dans la zone de stockage du réservoir (le casier ainsi vidé étant alors détourné de la ligne de convoyage principale) ou s'il doit être procédé à l'inverse, en transfert des oeufs rendus disponibles dans la zone de transfert du réservoir vers le casier en cours pour déchargement dans des emplacements vides de celui-ci. Les moyens de pilotage reçoivent à cet effet une information sur la constitution du casier se présentant en défilement et sur le nombre d'oeufs disponibles dans chaque rangée du réservoir et ils en déduisent des instructions de commande du bras et des moyens d'entraînement pour l'agencement de la zone de transfert du réservoir, préalable aussi bien au remplissage du casier qu'à l'alimentation du réservoir.

Les moyens logiciels de commande 20, propres au poste de remplissage, sont reliés à des moyens d'acquisition de données relatives au remplissage de chacun des casiers admis successivement et/ou à des moyens logiciels 50 propres au poste de mirage, et ils sont en outre reliés aux composants mécaniques du poste de remplissage pour piloter leur fonctionnement, à savoir le plateau de transfert 18 et les moyens d'entraînement du réservoir 26.

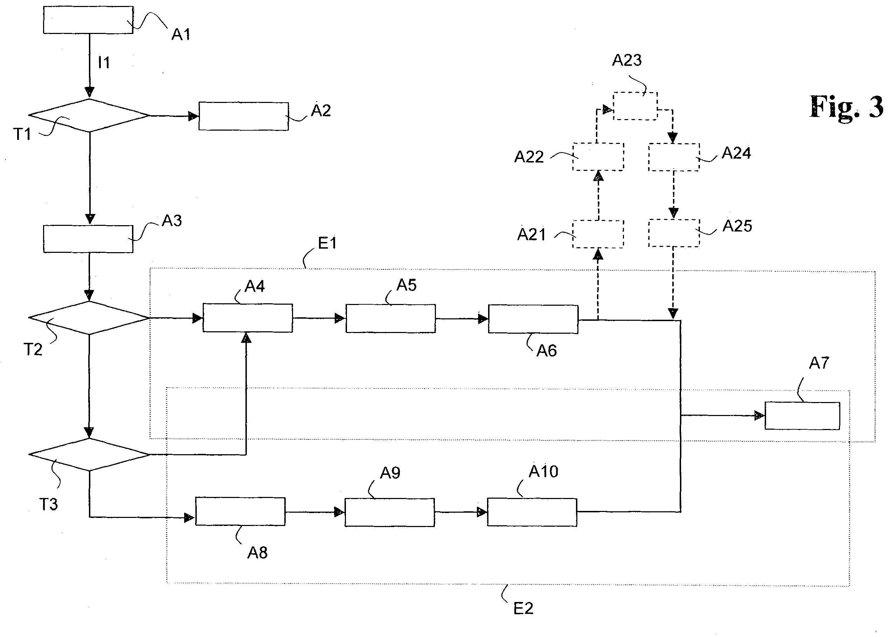

On va maintenant décrire fonctionnellement l'invention, en s'appuyant sur le diagramme de la figure 3 et sur l'illustration de différentes étapes aux figures 4 à 9, en passant en revue les étapes de procédé suivant lesquelles on réalise le remplissage du casier ou du réservoir, en fonction du nombre d'oeufs présents dans le casier en cours et du nombre d'oeufs présents dans le réservoir, en faisant à chaque fois correspondre une ligne d'emplacements récepteurs du casier en cours avec une rangée d'alvéoles présentées dans le réservoir. Tel qu'illustré sur les figures 4 à 9, la ligne C1 du casier est remplie ou vidée relativement au nombre d'oeufs présents dans la rangée R1 du réservoir et la n-ième ligne Cn est remplie ou vidée relativement au nombre d'oeufs présents dans la n-ième rangée Rn du réservoir.

Comme illustré par le diagramme de la figure 3, les moyens logiciels du poste de pilotage calculent automatiquement le nombre d'oeufs à prélever dans le réservoir pour remplir chaque casier, ainsi que la configuration dans laquelle disposer les alvéoles portant ces oeufs pour que les moyens de transfert puissent déposer correctement les oeufs dans chaque emplacement vide du casier. En outre, ils déterminent automatiquement s'il y a lieu, entre deux cycles de remplissage du casier courant, de procéder ponctuellement à un réapprovisionnement en oeufs du réservoir en alimentant ses alvéoles vides à partir d'un casier en défilement parvenant au poste de retassage duquel on prélève les oeufs qu'il contient. Il est décidé automatiquement, depuis le poste de pilotage, de l'opportunité d'un tel réapprovisionnement et de la sélection du casier à vider pour cela, en tenant compte notamment de la configuration du réservoir en alvéoles portant un oeuf et de l'état de remplissage du casier prochainement courant en emplacements pleins.

Quand un casier arrive au poste de retassage (action A1), en sortie de la machine à mirer qui le précède dans le sens de défilement des casiers sur le convoyeur, une information I1 relative au contenu de ce casier, c'est-à-dire à sa configuration en présence ou non d'oeufs dans chacun des emplacements, est transmise au dispositif de pilotage à partir de moyens logiciels propres à la machine à mirer par laquelle on vient de procéder à l'enlèvement des oeufs non valides du casier selon le résultat du mirage. Cette information, envoyée vers le module de commande automatique associé à l'installation, pourrait également provenir de capteurs à cellule photoélectrique propres à l'installation et aptes à détecter l'information de l'état de remplissage du casier.

Un premier test T1 est effectué par les moyens logiciels sur la base de cette information. Si le casier est vide, rien n'est mis en oeuvre (action A2) et le casier est évacué en sortie du poste de remplissage, de manière à ce qu'il ne se présente pas au poste d'injection de vaccin. Si le casier n'est pas vide, les moyens logiciels calculent (action A3) le nombre d'oeufs par ligne à compléter pour obtenir un remplissage du casier répondant au cahier des charges. Un deuxième test T2 est alors effectué sur la base de ce calcul et sur la base d'une information détenue par les moyens logiciels relative au nombre d'oeufs présents par rangée dans le réservoir. Si le réservoir comporte suffisamment d'oeufs par rangée pour compléter les lignes correspondantes du casier en cours, en respectant un seuil de complétude préalablement déterminé, on procède à une étape E1 de remplissage des casiers à proprement parler.

Dans cette étape E1, les moyens logiciels analysent l'agencement du casier sur la base de l'information de configuration du contenu initialement reçue (action A4) et ils en déduisent une instruction de commande pour les moyens d'entraînement, de manière à ce que ceux-ci agencent (action A5) la rangée du réservoir pour que les alvéoles porteuses d'oeufs présentes dans la zone de transfert du réservoir forment une image complémentaire de la répartition des oeufs présents dans le casier courant, c'est-à-dire une image opposée dans laquelle chaque emplacement vide du casier correspond à une alvéole pleine du réservoir, et inversement.

A titre d'exemple, on se réfère au cas illustré sur les figures 6 et 7, dans lequel le casier en cours présente plusieurs emplacements vides parmi lesquels un premier emplacement positionné en première ligne et septième colonne, un deuxième emplacement positionné en deuxième ligne et quatrième colonne et un troisième emplacement positionné en deuxième ligne et huitième colonne. La zone de transfert du réservoir est alors agencée par les moyens d'entraînement sous commande des moyens logiciels de manière à ce qu'une première alvéole porteuse d'un oeuf soit disposée en première rangée du réservoir, à une distance de la ligne de démarcation équivalente à l'encombrement de sept emplacements, une deuxième alvéole porteuse d'un oeuf soit disposée en deuxième rangée du réservoir, à une distance de la ligne de démarcation équivalente à l'encombrement de quatre emplacements, et une troisième alvéole porteuse d'un oeuf soit disposée en deuxième rangée du réservoir, à une distance de la ligne de démarcation équivalente à l'encombrement de huit emplacements. On peut observer en outre que les moyens d'entraînement ne procèdent pas au déplacement d'alvéoles dans la troisième rangée et les laissent toutes dans la zone de stockage, puisque le casier en cours ne présente pas d'emplacement vide dans sa troisième ligne.

Ainsi, le réservoir est configuré en fonction de la disposition des oeufs dans le casier en cours. On décrira plus en détail ci-après comment les moyens d'entraînement et leur pilotage par les moyens logiciels permet de réaliser cette étape de configuration du réservoir relativement à la forme du casier dont on complète le remplissage.

Le plateau de transfert procède alors à la saisie et au transfert (action A6) de tous les oeufs disposés dans la zone de transfert du réservoir vers le casier. La disposition des oeufs au moment de leur saisie dans la zone de transfert est conservée lors du transfert, de sorte que chaque oeuf saisi est déposé dans un emplacement vide du casier en cours, l'agencement des oeufs dans la zone de transfert avant saisie par le plateau de transfert étant une image miroir négative de l'image du casier faisant correspondre une alvéole porteuse d'oeuf à un emplacement vide du casier.

Après le transfert, les moyens d'entraînement associés au réservoir sont pilotés par les moyens logiciels (action A7) pour que les alvéoles porteuses d'oeufs soient poussées les unes contre les autres, par rangée, dans la zone de stockage, les alvéoles dans chaque rangée étant plus ou moins poussées de manière à ce que les rangées présentent un alignement sur la ligne de démarcation entre la zone de stockage et la zone de transfert (rendue visible sur les figures 6, 8 et 9).

Dans la mesure où le résultat du deuxième test T2 indique que le réservoir ne comporte pas suffisamment d'oeufs par rangée pour compléter les lignes correspondantes du casier en cours en respectant ledit seuil de complétude, on procède à un troisième test T3 par lequel on détermine si le réservoir a suffisamment d'alvéoles vides, rangée par rangée, pour accueillir tous les oeufs présents dans le casier en cours. Si le résultat est positif, c'est-à-dire que le réservoir a suffisamment d'alvéoles vides, rangée par rangée, pour accueillir tous les oeufs présents dans le casier, on réalise une étape E2 d'alimentation du réservoir, tel qu'elle va être décrite ci-après.

Un tel cas est illustré sur la figure 9, dans laquelle on a représenté un casier porteur de 15 oeufs sur la première ligne et de 12 oeufs sur la huitième ligne, et un réservoir avec vingt alvéoles vides sur la première rangée et dix-huit alvéoles vides sur la huitième rangée, chaque rangée du réservoir ayant au moins autant d'alvéoles vides qu'il y a d'oeufs présents sur la ligne correspondante du casier en cours. Par contre, si le résultat du test T3 est négatif, on réalise de nouveau l'étape E1 de remplissage du casier telle qu'elle vient d'être décrite précédemment, en admettant un fonctionnement dégradé du remplissage dans lequel le seuil de complétude n'est pas atteint. Un tel cas de résultat négatif du test est illustré sur la figure 8, dans laquelle on a représenté un casier porteur de 15 oeufs sur la première ligne et de 15 oeufs sur la quatrième ligne, et un réservoir avec seize alvéoles vides sur la première rangée et quatorze alvéoles vides sur la quatrième rangée. Le fait que cette quatrième rangée du réservoir présente moins d'alvéoles vides qu'il n'y a d'oeufs présents sur la ligne correspondante du casier en cours empêche le transfert total des oeufs du casier vers le réservoir et rend impossible l'étape d'alimentation.

On comprend que l'agencement des étapes et des tests tel qu'il est illustré sur la figure 3 vise à privilégier un remplissage optimal des casiers par le réservoir et à n'accepter un remplissage dégradé, c'est-à-dire avec plus de casiers laissés vides après le remplissage que ne le souhaite l'utilisateur, seulement lorsqu'une étape ponctuelle d'alimentation du réservoir ne peut avoir lieu. Ainsi, des étapes de remplissage de casiers se succèdent les unes après les autres, à chaque cycle de traitement d'un casier en cours, tant que le réservoir n'a pas suffisamment d'alvéoles vides pour accueillir tous les oeufs du casier courant suivant. Lorsque cela est le cas, une étape E2 d'alimentation du réservoir interrompt la succession d'étapes de remplissage des casiers.

L'étape E2 d'alimentation du réservoir est la suivante. Les moyens logiciels calculent la position des alvéoles à donner rangée par rangée pour la réception de l'ensemble des oeufs du casier courant (Action A8). Pour le bon fonctionnement du réservoir dans les opérations de remplissage des casiers à venir, il convient qu'aucune alvéole d'une rangée, après alimentation du réservoir par les oeufs d'un casier, ne soit laissée vide en amont d'une alvéole portant un oeuf. Les moyens logiciels réalisent alors une instruction de commande (Action A9) pour espacer certaines des alvéoles d'une rangée, tel que cela est visible sur la figure 4, de manière à ce que cette place laissée vide entre deux alvéoles corresponde à un emplacement vide d'oeuf du casier en cours.

Tel que cela peut être vu à la lecture de la figure 5, la disposition des oeufs saisis dans le casier en cours par le plateau de transfert (action A10) est conservée au dépôt dans le réservoir et les moyens d'entraînement associés au réservoir sont alors mis en oeuvre pour que les alvéoles accolées soient poussées les unes contre les autres, par rangée, dans la zone de stockage, de manière à ne pas laisser dans cette zone de stockage un espace vide d'oeuf entre deux alvéoles porteuses d'un oeuf.

On va détailler maintenant les opérations de configuration du réservoir relativement à la forme du casier en cours. Cette configuration a lieu, tel que cela a pu être compris à la lecture de la description qui précède, aussi bien avant le remplissage d'un casier qu'avant l'alimentation du réservoir par la totalité des oeufs d'un casier. Dans la présente description détaillée, on se reporte au cas illustré sur la figure 7, dans lequel on configure le réservoir pour que la zone de transfert forme une image négative du casier en cours de traitement visible sur les figures 6 et 7.

Les moyens logiciels ont déterminé dans ce cas comment il convient de remplir chacune des rangées du casier, à savoir ici pour les trois premières lignes, par un oeuf au septième emplacement de la première ligne, un oeuf au quatrième emplacement de la deuxième ligne, et un oeuf au huitième emplacement de la deuxième ligne.

Les moyens d'entraînement vont pousser rangée par rangée les alvéoles du réservoir pour configurer la zone de transfert comme un négatif de cette image du casier à remplir. Les moyens d'entraînement, pilotés par les moyens logiciels, vont placer notamment un oeuf sur la première rangée à une distance de la ligne de démarcation équivalente à sept emplacements d'oeufs d'un casier, un oeuf sur la deuxième rangée à une distance de la ligne de démarcation équivalente à quatre emplacements d'oeufs d'un casier, un oeuf sur la deuxième rangée à une distance de la ligne de démarcation équivalente à huit emplacements d'oeufs d'un casier et aucun oeuf sur la troisième rangée.

Le bras support des doigts rétractables (peigne) est déplacé axialement le long des rangées entre une première position d'extrémité, au-delà de la zone de stockage, comme illustré sur la figure 6, et une deuxième position d'extrémité, au-delà de la zone de transfert, comme il est illustré sur la figure 5. Les dispositifs à vérin sont actionnés indépendamment les uns des autres selon l'agencement à donner à chaque rangée à laquelle ils sont associés.

Dans le cas illustré, les dispositifs à vérin associés à la première et à la deuxième rangée (dents du peigne) sont tout de suite actionnés pour pousser leur rangée d'alvéoles, puisque des oeufs sont à prélever dans ces rangées, tandis que le dispositif à vérin associé à la troisième rangée n'est pas actionné, puisque aucun oeuf ne doit être prélevé dans cette rangée.

Le rôle des moyens d'entraînement est de déplacer les alvéoles de la zone de stockage vers la zone de transfert rangée par rangée, l'une par rapport à l'alvéole voisine, soit en laissant un ou plusieurs emplacements libres, soit en serrant les alvéoles les unes contre les autres.

Les moyens d'entraînement procèdent à une première action d'entraînement qui consiste, pour chaque rangée, à faire avancer l'ensemble des oeufs d'une distance correspondant au nombre d'oeufs à prélever dans cette rangée, et à placer ces oeufs dans la zone de chargement (appelée aussi zone de transfert), en leur faisant passer la ligne de démarcation virtuelle. Dans l'exemple décrit, un oeuf doit être prélevé sur la première rangée, de sorte que le dispositif à vérin est actionné en prise avec cette alvéole le temps du déplacement des moyens d'entraînement sur une distance correspondant à l'encombrement longitudinal d'une alvéole. Toutes les alvéoles sont poussées en série sous l'effet de l'action du doigt contre l'alvéole présente en tête de la série, la plus éloignée de la ligne de démarcation, de sorte que l'alvéole présente en queue de rangée, la plus proche de la ligne de démarcation, passe celle-ci, l'oeuf correspondant se retrouvant dans la zone de transfert. Le dispositif à vérin est alors piloté pour que le doigt prenne une position rétractée, de sorte que les alvéoles de cette rangée ne sont plus poussées et conservent leur position. Le dispositif à vérin passe sous les alvéoles, porté par le bras support. On comprend que dans le même temps, le dispositif à vérin associé à la troisième rangée n'est pas actionné, puisque aucun oeuf ne doit au final être prélevé dans cette troisième rangée, et que le dispositif à vérin associé à la deuxième rangée a été actionné pour pousser l'ensemble des alvéoles sur une distance correspondant à l'encombrement longitudinal de deux alvéoles, puisque deux oeufs doivent au final être prélevés dans cette deuxième rangée. Là encore, le dispositif à vérin associé à la deuxième rangée est piloté pour que le doigt prenne une position rétractée et puisse passer sous les alvéoles.

On procède alors à une deuxième action d'entraînement, à partir du moment où le bras support (peigne) passe la ligne de démarcation virtuelle. Cette deuxième action d'entraînement doit permettre d'agencer correctement dans la zone de transfert les oeufs poussés hors de la zone de stockage lors de la première action d'entraînement. Les dispositifs à vérin sont actionnés selon l'agencement à donner à leur rangée associée. Les moyens logiciels du dispositif de pilotage déterminent à quelle distance de la ligne de démarcation les alvéoles pleines doivent être placées pour former l'image miroir que l'on souhaite donner à la zone de transfert. Ils déterminent ainsi des cibles successives où placer ces alvéoles sur une même rangée. Le doigt est placé en position déployée pour pousser la ou les alvéoles à placer dans cette rangée, et le doigt est laissé dans cette position déployée jusqu'à ce que l'alvéole contre laquelle il pousse soit placée au niveau de la première cible déterminée, la plus proche de la ligne de démarcation. Pour placer l'alvéole, les moyens logiciels font rentrer le doigt du dispositif à vérin puis, lorsque le bras support a avancé d'une longueur d'alvéole, le doigt est de nouveau piloté en position déployée et recommence à pousser les alvéoles jusqu'à ce que l'alvéole qu'il pousse directement prenne place au niveau de la cible suivante.

Dans l'exemple précédemment décrit, le dispositif à vérin associé à la deuxième rangée est actionné dès la ligne de démarcation pour que les deux alvéoles sélectionnées à passer cette ligne soient poussées sur une longueur équivalente à quatre alvéoles, de sorte que l'alvéole entraînée directement par le doigt du dispositif à vérin, à savoir l'alvéole de queue la plus proche de la ligne de démarcation avant la deuxième action d'entraînement, prenne place sur la première cible correspondant à la position déterminée précédemment d'un oeuf sur la deuxième rangée à une distance de la ligne de démarcation équivalente à quatre emplacements d'oeufs d'un casier. Le doigt est alors rétracté alors que le bras support continue à avancer sous les alvéoles, et il est déployé juste après avoir passé l'alvéole que l'on souhaite laisser en place, de manière à venir au contact avec la deuxième alvéole, à placer plus loin sur la deuxième cible.

De la sorte, on pilote astucieusement le peigne à dents rétractables que constituent ensemble le bras support et les dispositifs à vérins de commande de leurs doigts respectifs, de façon à placer chaque alvéole à la bonne position en prévision de leur saisie par le plateau de transfert. On comprend que ces mouvements des moyens d'entraînement sont réalisés que l'on cherche à placer correctement des alvéoles vides pour recevoir les oeufs d'un casier dans une étape d'alimentation du réservoir, ou que l'on cherche à placer des alvéoles pleines pour compléter les casiers d'oeufs successifs.

Après l'opération de transfert, le peigne ayant terminé sa course va aller jusqu'à l'extrémité du réservoir en entraînant avec lui toutes les alvéoles inutiles qui se trouvaient, dans chaque rangée d'alvéoles en série, devant la dernière alvéole à avoir été laissée en place dans la zone de transfert proprement dite (celle sur laquelle opère le plateau de transfert), les doigts rétractables sont de nouveau actionnés, mais cette fois pour venir en prise avec l'alvéole en tête de série dans chaque rangée. Le bras support est commandé à engager son déplacement dans le sens retour de son mouvement de va-et-vient, et les doigts viennent buter à l'arrière des pattes d'entraînement des premières alvéoles rencontrées dans les différentes rangées, qui se retrouvent toutes entraînées en direction de l'autre extrémité du réservoir, devant une ligne d'entraînement matérialisée alors par le peigne. Les moyens d'entraînement traversent de nouveau le réservoir de l'une à l'autre de ses extrémités, cependant que les dispositifs à vérins sont actionnés en continu pour pousser et ranger les unes contre les autres les alvéoles, vides ou pleines selon l'opération précédente. Si une opération de remplissage de casier a précédé, la zone de transfert comporte des alvéoles laissées vides et les moyens d'entraînement les poussent contre les alvéoles pleines restées dans la zone de stockage, tout en s'assurant (en commandant le retrait des doigts des dispositifs à vérin au moment opportun) de laisser les alvéoles pleines dans une configuration où chaque rangée présente une alvéole pleine à la limite de la ligne de démarcation virtuelle, comme il est illustré sur la figure 6 par exemple. Si une opération de réapprovisionnement du réservoir a précédé, les moyens d'entraînement poussent les alvéoles jusqu'à se retrouver dans cette même configuration de la figure 6 où chaque rangée présente une alvéole pleine à la limite de la ligne de démarcation virtuelle.

Un deuxième mode de réalisation peut être décrit, en référence à la figure 3 et aux éléments de l'organigramme ajoutés en pointillés. Il diffère du premier mode de réalisation principalement en ce que l'on prévoit un second moyen de transfert d'oeufs, dit " local ", en plus du premier moyen de transfert d'oeufs constitué par le plateau de transfert décrit précédemment. Le moyen de transfert local a un champ d'action uniquement centré sur le réservoir, tandis que le plateau de transfert se déplace du réservoir au casier et inversement. Plus particulièrement, un bras de transfert d'oeufs interne au réservoir est utilisé à chaque cycle de remplissage, c'est-à-dire après chaque prélèvement d'oeufs de recharge par le plateau de transfert, d'égaliser le nombre d'alvéoles porteuses d'oeufs disponibles dans chaque rangée, en prélevant un nombre déterminé d'oeufs dans une rangée particulièrement bien fournie pour les déposer dans une rangée moins fournie.

De la sorte, on offre une solution au problème qui peut se poser lorsque le réservoir se vide seulement sur certaines rangées, tandis que les autres restent bien remplies. Ceci peut notamment se passer lorsque, et ce bien qu'en moyenne les oeufs non valides soient répartis équitablement sur toutes les lignes du casier, une succession de casiers contenant peu ou pas d'oeufs non valides sur une ligne précise, se succèdent dans le poste de remplissage. Or, telle que la machine est conçue, le réservoir est rempli par un casier en cours lorsque toutes les rangées du réservoir peuvent être approvisionnées simultanément. Il suffit donc qu'une rangée du réservoir n'ait pas suffisamment d'alvéoles vides pour que cet approvisionnement soit impossible, et que seule une rangée d'alvéoles continue à fournir des oeufs pour le remplacement des emplacements laissés vides dans la ligne correspondante du casier. Pendant ce temps, les autres rangées du réservoir, vides, ne permettent plus de compléter les casiers à 100%.

Le bras de transfert local reçoit une instruction en provenance des moyens logiciels associés au poste de remplissage, qui détermine automatiquement le nombre d'alvéoles porteuses d'un oeuf dans chaque rangée du réservoir et donc le repérage de la rangée d'alvéoles contenant le plus d'oeufs (action A21). Sur la base de cette donnée, les moyens logiciels indiquent dans quelle rangée d'alvéoles le bras de transfert doit saisir des oeufs et le nombre d'oeufs qu'il doit saisir (action A22). Simultanément, les moyens logiciels procèdent au repérage de la rangée d'alvéoles contenant le moins d'oeufs (action A23). Ils envoient alors une instruction de commande aux moyens d'entraînement pour qu'ils agencent (action A24) cette rangée de manière à présenter correctement un nombre d'alvéoles vides suffisant pour recevoir ces oeufs. Les moyens logiciels indiquent enfin au bras de transfert dans quelle rangée d'alvéoles ces oeufs doivent être déposés (action A25).

A titre d'exemple, le bras de transfert local peut, à chaque cycle, récupérer trois oeufs de la rangée la plus remplie du réservoir et les déposer dans la rangée la moins remplie. On comprend que le choix de trois oeufs est purement arbitraire, et qu'il pourrait ne pas être le même après chaque cycle, le bras de transfert étant alors agencé de sorte qu'il peut indifféremment saisir un ou plusieurs oeufs selon les instructions des moyens logiciels.

La modification du nombre d'oeufs dans deux rangées du réservoir qui découle de cette action des seconds moyens de transfert est suivie d'une commande des moyens d'entraînement pour ajuster si nécessaire la position des alvéoles pleines et des alvéoles vides de ces deux rangées, par rapport à la ligne de démarcation virtuelle entre la zone de transfert et la zone de stockage, tel que cette position recherchée après chaque cycle de remplissage a pu être décrite auparavant.

La description qui précède explique clairement comment l'invention permet d'atteindre les objectifs qu'elle s'est fixés. En particulier elle permet la mise en oeuvre d'opérations de retassage d'oeufs qui sont particulièrement efficaces pour conduire à un taux de remplissage optimal des casiers courants successifs.

Dans le cas du premier mode de réalisation, à savoir celui où seul le plateau de transfert principal est prévu (le plateau qui prélève les oeufs préparés dans les alvéoles du réservoir et qui les dépose dans le casier en cours), sans l'apport du bras de transfert d'oeufs local, il sera à la portée des gens de métier de déterminer au mieux quelle quantité supplémentaire d'alvéoles prévoir. Augmenter le nombre d'alvéoles dans le réservoir par rapport au nombre d'oeufs dans les casiers permet d'améliorer le taux de remplissage final, mais avec pour effet secondaire d'augmenter le temps moyen passé par les oeufs dans le réservoir, et donc hors des incubateurs.

Dans une variante de mise en oeuvre de l'invention non spécifiquement illustrée sur les dessins, on pourra prévoir de modifier le poste de retassage de manière à l'adapter au traitement de casiers d'oeufs de volailles respectant une répartition des emplacements récepteurs d'oeufs en quinconce plutôt qu'une simple répartition de damier en lignes et rangées suivant deux directions orthogonales entre elles. Une solution appropriée pour ce faire consiste à équiper les moyens de transfert des oeufs entre réservoir et casier en cours d'un mécanisme apte à transformer l'arrangement rectangulaire du réservoir en arrangement en quinconce en décalant les alvéoles d'un demi-pas, ponctuellement chaque fois qu'il est nécessaire. Réaliser cette opération au niveau du dispositif de transfert des oeufs permet de satisfaire au mieux à un arrangement en quinconce du point de vue de la structure de l'appareillage et de la sécurité de fonctionnement.

Il ressort de ce qui précède que l'invention n'est pas limitée aux modes de mise en oeuvre qui ont été spécifiquement décrits ni aux formes concrètes de réalisation qui ont été représentées sur les figures. Elle s'étend au contraire à toute variante passant par le biais de moyens équivalents. C'est ainsi qu'il existe des situations où l'on pourra s'affranchir de la présence d'alvéoles réceptrices d'oeufs concrétisées matériellement dans leur mobilité sur des rails prévus à cet effet dans le réservoir. A supposer par exemple que tout en restant dans le monde de l'industrie alimentaire, les objets oeufs contenus rangés dans des alvéoles individuelles dans les casiers ne soient plus des oeufs de volailles avec leurs exigences sévères de manipulation mais des fruits se rangeant librement côte-à-côte, l'un derrière l'autre sur chaque colonne du casier, on pourra utiliser un réservoir comportant un ensemble de doigts rétractables individuellement commandés entre position éjectée et position escamotée quand nécessaire pour saisir les objets disponibles sur chaque rangée en un nombre correspondant au nombre d'objets manquants dans la colonne de réservoir correspondante, les pousser jusqu'à les amener en position pour être saisis collectivement par le dispositif de transfert et être déposés par ce dispositif dans la place laissée libre dans chaque colonne à l'arrière du casier en cours.

L'invention n'est pas plus limitée à une mise en oeuvre intégrant le poste de retassage avec son réservoir et son dispositif de pilotage associé dans une chaîne de production impliquant un poste de mirage des oeufs en étape de traitement antérieur et/ou un poste d'injection de vaccin en étape ultérieure, que les opérations propres à chacune de ces étapes soient réalisées en continuité avec l'étape de retassage, respectivement avant et après celle-ci dans la même installation industrielle, ou que par rapport à l'étape de retassage, elles soient différées dans le temps et/ou mises en oeuvre dans des sites géographiquement éloignés.

S'il est exact qu'en ce qui concerne les casiers d'oeufs à leur admission aux opérations de retassage, des casiers d'oeufs insuffisamment remplis viennent le plus souvent après un traitement antérieur procédant par contrôle non destructif de l'état des oeufs individuels effectué par visiométrie et conduisant à extraire de chaque casier les oeufs jugés non valides par une analyse automatique de l'information recueillie par visiométrie, il est tout aussi exact qu'en sortie du poste de retassage, les casiers dont le remplissage a été complété peuvent être destinés à bien des traitements ultérieurs autres que l'injection de vaccin. On peut penser à l'injection d'une semence virale dans les applications utilisant les oeufs fécondés comme milieu de culture pour la production de vaccin, ou à l'injection dans les oeufs de tout produit de traitement en protection des poussins qui naîtront des oeufs traités, ou encore au prélèvement d'un échantillon de la matière interne à chaque oeuf au moyen d'une aiguille perçant la coquille. Il s'agit de cas d'exemple où les exigences industrielles sont particulièrement sévères à la fois quant à l'état de remplissage de chaque casier et quant à la régularité géométrique en termes de forme des oeufs individuels et de disposition des différents oeufs dans leurs emplacements récepteurs respectifs.

## Revendications

1. Procédé de remplissage de casiers d'oeufs (8) en défilement par chargement d'emplacements vides (22) de chaque casier successivement en cours (8) au moyen d'oeufs disponibles prélevés hors dudit casier en cours, suivant lequel les oeufs à utiliser pour ledit chargement d'emplacements vides sont rendus disponibles pour prélèvement dans des alvéoles réceptrices d'oeufs (24) qui sont montées individuellement mobiles dans un réservoir d'oeufs disponibles (16) où elles sont déplacées sous la commande d'un dispositif de pilotage qui détermine automatiquement une mise en place d'alvéoles porteuses d'oeufs disponibles suivant une configuration de réservoir définie en correspondance avec un état de remplissage du casier en cours définissant sa configuration en emplacements vides.

2. Procédé selon la revendication 1, suivant lequel le chargement du casier en cours (8) s'effectue par prélèvement simultané des différents oeufs disponibles préparés dans des alvéoles respectives (24) du réservoir (16) amenées dans ladite configuration de réservoir, puis transport de l'ensemble vers ledit casier en cours où les différents oeufs sont alors déposés dans les emplacements respectifs du casier, ladite configuration de réservoir ayant été établie automatiquement en fonction de la disponibilité en oeufs dans les alvéoles du réservoir et dudit état de remplissage du casier pour que le transfert des oeufs entre les alvéoles porteuses d'oeufs du réservoir et les emplacements récepteurs d'oeufs du casier en cours s'opère par correspondance entre la présence d'un emplacement vide dans le casier et la présence dans le réservoir d'une alvéole porteuse d'un oeuf disponible pour transfert.

3. Procédé selon la revendication 1 ou 2, suivant lequel à chaque cycle de chargement d'un casier en cours, les alvéoles réceptrices d'oeufs sont déplacées dans le réservoir (16) entre une zone de chargement et stockage où des oeufs y sont déposés et une zone de disponibilité pour transfert où des alvéoles porteuses d'oeufs sont mises en place suivant ladite configuration de réservoir, le prélèvement des oeufs ainsi préparés disponibles étant ensuite effectuée automatiquement par un plateau de transfert commandé automatiquement pour tous les saisir simultanément, déplacer l'ensemble jusqu'au casier en cours et tous les libérer simultanément pour les déposer dans ledit casier.

4. Procédé selon l'une quelconque des revendications 1 à 3, suivant lequel, on procède ponctuellement à un réapprovisionnement en oeufs du réservoir en transférant dans des alvéoles qui y sont vides des oeufs qui sont prélevés dans l'un des casiers successifs que l'on affecte à cet usage.

5. Procédé selon l'une quelconque des revendications 1 à 4, suivant lequel, à chaque cycle de traitement d'un casier en cours, on procède alternativement à une étape de concentration des alvéoles du réservoir tendant à les ramener par rangées d'alvéoles accolées les unes contre les autres vers une zone de stockage du réservoir (46), et à une étape de distribution d'alvéoles porteuses d'oeufs vers une zone de transfert du réservoir où elles sont placées automatiquement conformément à ladite configuration de réservoir pour transfert des oeufs qu'elles portent vers le casier (8) en cours de retassage.

6. Procédé selon la revendication précédente, suivant lequel dans chaque rangée d'alvéoles concentrées accolées dans ladite zone de stockage d'alvéoles porteuses d'oeufs (46), on amène en avant d'une ligne d'entraînement pour distribution vers la zone de transfert un nombre d'alvéoles qui est automatiquement déterminé pour chaque rangée en fonction de ladite configuration de réservoir déterminée automatiquement en correspondance avec l'état de remplissage du casier à remplir.

7. Procédé selon la revendication 5 ou 6, comportant en outre une étape de redistribution locale des oeufs disponibles dans le réservoir par prélèvement d'oeufs présents dans les alvéoles réceptrices d'oeuf appartenant à une rangée d'alvéoles plus fournie en oeufs disponibles pour déposer les oeufs ainsi prélevés dans des alvéoles vides occupant une rangée d'alvéoles moins fournie en oeufs disponibles, lesdites rangées plus et moins fournies étant déterminées automatiquement en fonction d'un dénombrement des oeufs qu'elles contiennent encore après prélèvement des oeufs transférés vers les casiers au cours des cycles précédents de remplissage d'un casier.

8. Procédé selon l'une des revendications 5 à 7, suivant lequel on détermine automatiquement un besoin de réapprovisionner ledit réservoir (16) en comparant le nombre d'oeufs disponibles dans des alvéoles successives en série dans chacune desdites rangées (R) avec le nombre d'emplacements vides d'oeuf dans respectivement chaque ligne d'emplacements correspondante dans le casier à remplir (C), et suivant lequel, lorsqu'un tel besoin est constaté, on interrompt le remplissage des casiers successifs pour procéder ponctuellement à un réapprovisionnement du réservoir (16) en l'alimentant en oeufs par transfert dans ses alvéoles vides de l'ensemble des oeufs présents dans l'un des casiers en défilement non encore traité par remplissage.

9. Procédé selon l'une des revendications précédentes, suivant lequel l'information de configuration de casier définissant un état de remplissage de chaque casier en défilement par la répartition entre emplacements vides et emplacements pleins, est obtenue par des moyens capteurs spécifiques à l'étape de remplissage, disposés sur les casiers ou sur le passage de ceux-ci.

10. Procédé selon l'une des revendications 1 à 8, suivant lequel le remplissage des casiers successifs en défilement a lieu après une étape antérieure de contrôle d'état des oeufs et d'extraction des oeufs jugés non valides hors des casiers, et suivant lequel l'information d'état de remplissage de chaque casier en défilement est fournie automatiquement en fonction de la répartition entre emplacements vides et emplacements pleins connue de l'étape antérieure.

11. Installation de remplissage de casiers d'oeufs (8) en défilement comportant un poste de retassage par transfert d'oeufs prélevés ailleurs pour être déposés dans des emplacements de chaque casier en cours détectés comme étant vides, **caractérisée en ce qu'**elle comporte un réservoir d'oeufs disponibles (16) dans lequel des alvéoles (24) chacune réceptrice d'un oeuf sont individuellement mobiles au sein du réservoir sous l'action de moyens d'entraînement (26) à commande automatique déterminant la distribution d'alvéoles porteuses d'oeufs disponibles dans une zone de transfert (48) du réservoir, un plateau de transfert (18) constituant des moyens pour transférer des oeufs prélevés dans ladite zone de transfert (48) dudit réservoir à un casier en cours de retassage (8) et les déposer dans des emplacements récepteurs d'oeufs dudit casier, ainsi qu'un dispositif de pilotage en commande automatique desdits moyens d'entraînement des alvéoles pour assurer la distribution d'alvéoles porteuses d'oeufs disponibles dans ladite zone de transfert suivant une configuration de réservoir établie automatiquement en fonction d'un état de remplissage du casier en cours définissant sa configuration en répartition des emplacements vides d'oeufs de manière à faire correspondre chaque alvéole pleine contenant un oeuf disponible avec un emplacement vide d'oeuf dans ledit casier.

12. Installation selon la revendication 11, **caractérisée en ce que** les moyens de transfert (18) consistent en un plateau à ventouses comportant des moyens de saisie individuelle des oeufs qui sont répartis en autant de lignes et de colonnes que chacun desdits casiers en défilement (8) comportent d'emplacements d'oeuf.

13. Installation selon la revendication 11 ou 12, **caractérisée en ce que** les alvéoles réceptrices d'oeufs du réservoir (16) sont groupées en rangées (Rn) distinctes les unes des autres et formées chacune d'alvéoles (24) individuellement mobiles le long de la rangée correspondante sous l'effet desdits moyens d'entraînement (26) associés au réservoir.

14. Installation selon la revendication 13 **caractérisée en ce que** dans chacune desdites rangées les alvéoles sont montées en série sur un rail de guidage de leurs déplacements et **en ce que** dans chaque série elles sont accolées les unes contre les autres sur ledit rail de sorte qu'elles se poussent mutuellement le long dudit rail lorsque l'une d'entre elles est commandée à se déplacer.

15. Installation selon l'une des revendications 13 et 14, **caractérisée en ce que** lesdites rangées (Rn) comportent chacune un nombre d'alvéoles mobiles (24) supérieur au nombre d'emplacements récepteurs d'oeufs (22) dans chaque ligne (Cn) des casiers successifs à remplir (8).

16. Installation selon la revendication 15, **caractérisée** en qu'en plus de ladite zone de transfert (48) dans laquelle s'effectue, à chaque cycle de remplissage d'un casier en cours, la distribution des alvéoles porteuses d'oeufs suivant la configuration déterminée automatiquement en fonction de la configuration en emplacements vides du casier en cours, ainsi que la saisie des oeufs hors desdites alvéoles ainsi distribuées par lesdits moyens de transfert, ledit réservoir (16) comporte une zone (46) de stockage d'alvéoles porteuses d'oeufs pour les alvéoles non utilisées pour le remplissage du casier en cours.

17. Installation selon l'une quelconque des revendications 13 à 16, **caractérisée en ce que** lesdits moyens d'entraînement (26) comportent un peigne à dents rétractables qui est monté mobile le long desdites rangées d'alvéoles de l'une à l'autre de leurs extrémités en travers de l'ensemble desdites rangées, les dents du peigne étant chacune affectée à l'une desdites rangées d'alvéoles et individuellement commandées entre une position active en entraînement d'une alvéole de la rangée correspondante avec laquelle elle vient en prise et une position inactive où elle s'efface à l'écart des alvéoles pendant que le peigne parcourt l'ensemble des rangées d'alvéoles.

18. Installation suivant la revendication 17, **caractérisée en ce que** ledit peigne est réalisé sous la forme d'un bras supportant des dispositifs à vérin (34) portant chacun un doigt constituant l'une desdites dents rétractables dudit peigne.

19. Installation suivant la revendication 17 ou 18, **caractérisée en ce que** chaque alvéole mobile du réservoir présente une patte d'entraînement (32) avec laquelle la dent de peigne correspondante vient en prise quand elle est déployée en position active pour l'entraîner en déplacement dans un sens ou dans l'autre le long d'un rail de guidage des alvéoles en série sur la même rangée.

20. Installation selon l'une des revendications 13 à 18, **caractérisé en ce qu'**elle comporte en outre un bras de transfert local d'oeufs entre des alvéoles différentes au sein dudit réservoir, ledit bras de transfert local étant piloté automatiquement pour prélever des oeufs présents dans des alvéoles d'une rangée déterminée automatiquement comme étant plus fournie en oeufs et pour les déposer dans des alvéoles vides relevant d'une rangée automatiquement déterminée comme étant moins fournie en oeufs.

21. Installation selon l'une quelconque des revendications d'installation précédentes combinée à la revendication 17, **caractérisée en ce qu'**elle comporte des moyens de pilotage desdits moyens d'entraînement d'alvéoles configurés pour commander l'entraînement dudit peigne dans un mouvement de translation le long desdites rangées d'alvéoles en va-et-vient parcourant les alvéoles des différentes rangées du réservoir et pour commander les dents du peigne pour que chacune, sur la rangée correspondante, vienne en prise, alternativement, soit avec une dernière des alvéoles à déplacer quand le peigne se déplace dans le sens aller pour distribuer les alvéoles porteuses d'oeufs dans une zone de transfert des oeufs en remplissage d'un casier en cours, soit avec une première des alvéoles qui ont été ainsi vidées de leurs oeufs à l'aller (y compris celles qui étaient déjà vides), lorsque le peigne est déplacé en retour vers une zone de stockage des alvéoles porteuses d'oeufs d'où, à chaque cycle de remplissage d'un casier, les alvéoles à distribuer pour transfert sont extraites, en un nombre qui sur chaque rangée est déterminé automatiquement en fonction de ladite configuration de réservoir à respecter.

22. Installation suivant la revendication 21, **caractérisée en ce qu'**elle comporte des moyens pour déterminer automatiquement quand effectuer un réapprovisionnement du réservoir en oeufs, ainsi que des moyens pour commander alors lesdits moyens d'entraînement du peigne et de commande de ses dents pour, lors du déplacement du peigne dans ledit sens aller de son mouvement de va-et-vient, distribuer des alvéoles vides dans ladite zone de transfert en conformité avec une configuration déterminée pour correspondre à la configuration en emplacements pleins du casier en cours qui est alors affecté au réapprovisionnement, ainsi que des moyens pour commander ensuite les moyens de transfert des oeufs de manière à saisir les oeufs présents dans ledit casier et les déposer dans les alvéoles vides qui ont été disposées dans la zone de transfert.

## Patentansprüche

1. Verfahren zur Befüllung sich bewegender Eiergestelle (8) durch Beladung leerer Stellen (22) jedes der sich nacheinander bewegenden Gestelle (8) mit Hilfe von verfügbaren Eiern, die aus dem genannten Gestell in Bewegung entnommen worden waren, nach dem die für die Beladung leerer Stellen zu verwendenden Eier für eine Entnahme in Eier-Aufnahmevertiefungen (24) verfügbar gemacht werden, welche einzeln beweglich in einem Vorratsbehälter für verfügbare Eier (16) montiert sind, wo sie unter Steuerung einer Regulierungsvorrichtung, die automatisch eine Anordnung von verfügbaren Eier-Tragevertiefungen nach einer Vorratsbehälterkonfiguration bestimmt, welche entsprechend einem Befüllungszustand des Gestells in Bewegung, der seine Konfiguration an leeren Stellen definiert, definiert ist, verschoben werden.

2. Verfahren nach Anspruch 1, nach dem die Beladung des Gestells in Bewegung (8) durch gleichzeitige Entnahme verschiedener verfügbarer Eier, die in entsprechenden Vertiefungen (24) des Vorratsbehälters (16), die zu der genannten Konfiguration des Behälters führten, vorbereitet sind, danach Transport des Ganzen zu dem Gestell in Bewegung, wo die verschiedenen Eier dann in den entsprechenden Stellen des Gestells abgelegt werden, erfolgt, wobei die genannte Konfiguration des Vorratsbehälters automatisch als Funktion der Verfügbarkeit an Eiern in den Vertiefungen des Vorratsbehälters und des Befüllungszustandes des Gestells entwickelt wurde, damit die Übertragung der Eier zwischen den Eier-Tragevertiefungen des Vorratsbehälters und den Eier-Aufnahmestellen des Gestells in Bewegung in Übereinstimmung zwischen dem Vorliegen einer leeren Stelle in dem Gestell und dem Vorliegen einer Tragevertiefung für ein für eine Übertragung verfügbares Ei in dem Vorratsbehälter erfolgt.

3. Verfahren nach Anspruch 1 oder 2, nach dem in jedem Beladungszyklus eines Gestells in Bewegung die Eier-Aufnahmevertiefungen in dem Vorratsbehälter (16) zwischen einer Beladungs- und Lagerungszone, in der die Eier dort abgelegt werden, und einer Verfügbarkeitszone zur Übertragung, in der die Eier-Tragevertiefungen nach der Vorratsbehälterkonfiguration angeordnet sind, verschoben werden, wobei die Entnahme der so vorbereiteten verfügbaren Eier dann automatisch durch eine Übertragungsplatte durchgeführt wird, welche automatisch gesteuert wird, um sie alle gleichzeitig zu greifen, die Gesamtheit bis zum Gestell in Bewegung zu versetzen und alle gleichzeitig freizugeben, um sie in dem genannten Gestell abzulegen.

4. Verfahren nach einem der Ansprüche 1 bis 3, nach dem man pünktlich ein Wiederauffüllen des Vorratsbehälters mit Eiern durchführt, indem man in Vertiefungen, die leer sind, Eier überträgt, die einem der nachfolgenden Gestelle, die man dieser Verwendung zuordnet, entnommen wurden.

5. Verfahren nach einem der Ansprüche 1 bis 4, nach dem man bei jedem Behandlungszyklus eines Gestells in Bewegung alternativ eine Stufe der Konzentrierung der Vertiefungen des Vorratsbehälters mit dem Ziel, diese in Reihen von Vertiefungen, die eine neben der anderen aneinander gereiht sind, zu einer Lagerungszone des Behälters (46) zurückzuführen, und eine Stufe der Verteilung von Eier-Tragevertiefungen zu einer Übertragungszone des Vorratsbehälters durchführt, wo sie automatisch entsprechend der genannten Vorratsbehälterkonfiguration für eine Übertragung der Eier, die sie tragen, zu dem Gestell in Bewegung (8) zur Auffüllung platziert werden.

6. Verfahren nach dem vorangehenden Anspruch, nach dem in jeder Reihe von Vertiefungen, die in der Lagerungszone von Eier-Tragevertiefungen (46) konzentriert und in Reihe angeordnet sind, vor einer Antriebslinie zur Verteilung zur Übertragungszone eine Anzahl von Vertiefungen zuführt, die automatisch für jede Reihe als Funktion der Konfiguration des Vorratsbehälters bestimmt wird, welche automatisch entsprechend dem Befüllungszustand des zu befüllenden Gestells bestimmt wird.

7. Verfahren nach Anspruch 5 oder 6, das außerdem eine Stufe der lokalen Neuverteilung der verfügbaren Eier in dem Vorratsbehälter umfasst, und zwar durch Entnahme von Eiern, die in den Eier-Aufnahmevertiefungen vorhanden sind, die zu einer Reihe von Vertiefungen gehören, die stärker mit verfügbaren Eiern beliefert ist, um die so entnommenen Eier in leeren Vertiefungen, die eine Reihe von Vertiefungen besetzen, die weniger mit verfügbaren Eiern beliefert ist, abzulegen, wobei die mehr und weniger belieferten Reihen automatisch als Funktion einer Zählung der Eier, die sie noch nach Entnahme der Eier, die zu den Gestellen im Verlauf der vorangehenden Befüllungszyklen eines Gestells transferiert wurden, enthalten, bestimmt werden.

8. Verfahren nach einem der Ansprüche 5 bis 7, nach dem man automatisch eine Notwendigkeit des Wiederauffüllens des Vorratsbehälters (16) bestimmt, indem man die Zahl an verfügbaren Eiern in in Serie aufeinander folgenden Vertiefungen in jeder der genannten Reihen (R) mit der Anzahl leerer Eierstellen in jeder entsprechenden Linie von Stellen in dem zu befüllenden Gestell (C) vergleicht, und nach dem man, wenn eine derartige Notwendigkeit festgestellt ist, die Befüllung der sich hintereinander bewegenden Gestelle unterbricht, um pünktlich ein Wiederauffüllen des Vorratsbehälters (16) durchzuführen, indem man eine Versorgung mit Eiern durch Übertragung von Eiern, die in einem der sich bewegenden Gestelle, das noch nicht durch Befüllung behandelt worden ist, vorhanden sind, in leere Vertiefungen der Gesamtheit durchführt.

9. Verfahren nach einem der vorangehenden Ansprüche, nach dem die Informationen über die Konfiguration eines Gestells, die einen Befüllungszustand jedes Gestells in Bewegung durch Aufteilung zwischen leeren Stellen und gefüllten Stellen definiert, mittels Sonden, die für die Stufe der Befüllung spezifisch sind, die an den Gestellen oder an dem Durchgang dieser angeordnet sind, erhalten werden.

10. Verfahren nach einem der Ansprüche 1 bis 8, nach dem die Befüllung der sich hintereinander bewegenden Gestelle nach einer vorherigen Stufe der Kontrolle des Zustands der Eier und der Entfernung der Eier, die als nicht gesund beurteilt wurden, aus den Gestellen erfolgt, und nach dem die Informationen über den Befüllungszustand jedes Gestells in Bewegung automatisch als Funktion der Verteilung zwischen leeren Stellen und befüllten Stellen, die aus der vorherigen Stufe bekannt ist, geliefert werden.

11. Anlage zur Befüllung sich bewegender Eiergestelle (8), umfassend eine Station zur Auffüllung durch Übertragung von Eiern, die anderswo entnommen worden waren, um an Stellen jedes Gestells in Bewegung, die als leer detektiert wurden, abgelegt zu werden, **dadurch gekennzeichnet, dass** sie umfasst: einen Vorratsbehälter (16) für verfügbare Eier, in welchem Vertiefungen (24), jede zur Aufnahme eines Eis, einzeln beweglich im Inneren des Vorratsbehälters sind unter der Wirkung von Antriebsmitteln (26) mit automatischer Steuerung, die die Verteilung von Tragevertiefungen für verfügbare Eier in einer Transferzone (48) des Vorratsbehälters bestimmen, eine Übertragungsplatte (18), die Mittel bildet, um Eier, die in der Übertragungszone (48) des Vorratsbehälters entnommen worden waren, zu einem Gestell in Bewegung zur Auffüllung zu übertragen und sie in Eier-Aufnahmevertiefungen abzulegen, sowie eine Regulierungsvorrichtung mit automatischer Steuerung der Antriebsmittel der Vertiefungen, um die Verteilung von Tragevertiefungen für verfügbare Eier in der Übertragungszone nach einer Vorratsbehälterkonfiguration zu gewährleisten, welche automatisch als Funktion eines Befüllungszustandes des Gestells in Bewegung, der seine Konfiguration zur Neuverteilung der leeren Eierstellen definiert, entwickelt wurde, und zwar derart, dass jede gefüllte Vertiefung, die ein verfügbares Ei enthält, mit einer leeren Stelle im Gestell in Übereinstimmung gebracht wird.

12. Anlage nach Anspruch 11, **dadurch gekennzeichnet, dass** die Übertragungsmittel (18) aus einer Platte mit Saugknöpfen bestehen, die Mittel zum einzelnen Greifen der Eier umfasst, die sowohl in Reihen als auch Kolonnen aufgeteilt werden, sodass jedes der sich bewegenden Gestelle (8) Eierstellen umfasst.

13. Anlage nach Anspruch 11 oder 12, **dadurch gekennzeichnet, dass** die Eier-Aufnahmevertiefungen des Vorratsbehälters (16) in voneinander verschiedenen Reihen (Rn) gruppiert sind und jede Vertiefung (24) einzeln beweglich entlang der entsprechenden Reihe unter der Wirkung der Antriebsmittel (26), die mit dem Vorratsbehälter verbunden sind, ausgebildet ist.

14. Anlage nach Anspruch 13, **dadurch gekennzeichnet, dass** in jeder der genannten Reihen die Vertiefungen in Serie auf einer Führungsschiene ihrer Verschiebungen montiert sind und dass sie in jeder Serie auf der Schiene eine neben der anderen derart aufgereiht sind, dass sie sich entlang der Schiene gegenseitig vorwärts stoßen, wenn eine von ihnen gesteuert wird, sich zu verschieben.

15. Anlage nach einem der Ansprüche 13 und 14, **dadurch gekennzeichnet, dass** die genannten Reihen (Rn) jeweils eine Anzahl mobiler Vertiefungen (24) umfassen, die über der Anzahl an Eier-Aufnahmestellen (22) in jeder Linie (Cn) der aufeinanderfolgenden zu befüllenden Gestelle (8) liegt.

16. Anlage nach Anspruch 15, **dadurch gekennzeichnet, dass** der genannte Vorratsbehälter (16) außer der Übertragungszone (48), in der bei jedem Befüllungszyklus eines Gestells in Bewegung die Verteilung der Eier-Tragevertiefungen nach der Konfiguration, die automatisch als Funktion der Konfiguration an leeren Stellen des Gestells in Bewegung bestimmt wurde, sowie das Greifen der Eier aus den so verteilten Vertiefungen durch die Übertragungsmittel erfolgt, eine Zone (46) zur Lagerung von Eier-Tragevertiefungen für die nicht zur Befüllung des Gestells in Bewegung verwendeten Vertiefungen umfasst.

17. Anlage nach einem der Ansprüche 13 bis 16, **dadurch gekennzeichnet, dass** die Antriebsmittel (26) einen Kamm mit zurückziehbaren Zähnen umfassen, der beweglich entlang der Reihen von Vertiefungen von einem zum anderen ihrer Enden über die Gesamtheit der Reihen montiert ist, wobei die Zähne des Kamms jeweils einer der Reihen von Vertiefungen zugeordnet sind und einzeln zwischen einer Position, die zum Antrieb einer Vertiefung der entsprechenden Reihe aktiv ist, mit der er in Eingriff kommt, zu einer inaktiven Position, wo er abseits der Vertiefungen seiner Aktivität in Eingriff kommt, gesteuert werden, während der Kamm die Gesamtheit der Reihen von Vertiefungen durchstreift.

18. Anlage nach Anspruch 17, **dadurch gekennzeichnet, dass** der Kamm in Form eines Armes ausgeführt ist, der Kolbenantriebe (34) trägt, die jeweils einen Finger tragen, der einen der zurückziehbaren Zähne des Kamms bildet.

19. Anlage nach Anspruch 17 oder 18, **dadurch gekennzeichnet, dass** jede bewegliche Vertiefung des Vorratsbehälters einen Antriebsfuß (32) aufweist, mit dem der entsprechende Kammzahn in Eingriff kommt, wenn er in eine aktive Position ausgefahren wird, um eine Verschiebung der Vertiefungen in Reihe auf derselben Reihe in einer Richtung oder der anderen entlang einer Führungsschiene anzutreiben.

20. Anlage nach einem der Ansprüche 13 bis 16, **dadurch gekennzeichnet, dass** sie außerdem einen lokalen Eier-Übertragungsarm zwischen den unterschiedlichen Vertiefungen im Inneren des Vorratsbehälters umfasst, wobei der lokale Übertragungsarm automatisch gesteuert wird, um Eier, die in Vertiefungen einer Reihe, die automatisch als stärker mit Eiern beliefert bestimmt worden ist, zu entnehmen und um sie in leeren Vertiefungen einer Reihe, die automatisch als weniger mit Eiern beliefert bestimmt worden ist, abzulegen.

21. Anlage nach einem der vorangehenden Ansprüche der Anlage in Verbindung mit Anspruch 17, **dadurch gekennzeichnet, dass** sie Regulierungsmittel der Antriebsmittel für Vertiefungen umfasst, die konfiguriert sind, um den Antrieb des Kamms in einer Translationsbewegung entlang der Reihen von Vertiefungen zu steuern, indem die Vertiefungen der verschiedenen Reihen des Vorratsbehälters hin und her durchsucht werden, und um die Zähne des Kamms zu steuern, damit jeder, auf der entsprechenden Reihe, in Eingriff kommt, alternativ entweder mit einer letzten der zu verschiebenden Vertiefungen, wenn der Kamm sich in dem Sinn verschiebt, um die Eier-Tragevertiefungen in eine Übertragungszone der Eier zur Befüllung eines Gestells in Bewegung zu verschieben, oder mit einer ersten der Vertiefungen, die so von ihren Eiern befreit wurden, weiter zu laufen (hier eingeschlossen die, die bereits leer sind), wenn der Kamm zurück zu einer Lagerungszone der Eier-Tragevertiefungen verschoben wird, von wo aus in jedem Befüllungszyklus eines Gestells die zu verteilenden Vertiefungen zur Übertragung herausgenommen werden, und zwar in einer Zahl, die über jeder Reihe automatisch als Funktion der zu respektierenden Vorratsbehälterkonfiguration bestimmt wird.

22. Anlage gemäß Anspruch 21, **dadurch gekennzeichnet, dass** sie Mittel umfasst, um automatisch zu bestimmen, wann eine Wiederauffüllung des Vorratsbehälters mit Eiern durchzuführen ist, sowie Mittel zum Steuern der Antriebsmitteln des Kamms und der Steuerung seiner Zähne umfasst, um während der Verschiebung des Kamms in der genannten Richtung in seiner Bewegung, hin und herzugehen, die leeren Vertiefungen in der Übertragungszone gemäß einer Konfiguration zu verteilen, die bestimmt wurde, um der Konfiguration an vollen Stellen des Gestells in Bewegung zu entsprechen, das dann zur Wiederauffüllung gebracht wird, sowie Mittel umfasst, um danach die Übertragungsmittel der Eier derart zu steuern, dass die Eier, die in dem Gestell vorhanden sind, gegriffen werden und sie in den leeren Vertiefungen, die in der Übertragungszone angeordnet wurden, abgelegt werden.

## Claims

1. A method for filling traveling egg trays (8) by filling empty locations (22) of each current tray (8) successively by using available eggs collected elsewhere than said current tray, wherein the eggs to be used for said filling of empty locations are made available for collection in egg receiving cells (24) that are mounted to be individually movable in an available egg reservoir (16), where they are moved under the control of a driving device that automatically determines a placement of available egg-bearing cells based on a reservoir configuration corresponding to a filling state of the current tray defining its empty location configuration.

2. The method according to claim 1, wherein the filling of the current tray (8) is done by simultaneously collecting the various available prepared eggs from respective cells (24) of the reservoir (16) brought into said reservoir configuration, then transporting the set toward said current tray, where the various eggs are then deposited in the respective locations of the tray, said reservoir configuration having been established automatically as a function of the availability of eggs in the cells of the reservoir and said filling state of the tray so that the transfer of the eggs between the egg-bearing cells of the reservoir and the egg receiving locations of the current tray is done by correspondence between the presence of an empty location in the tray and the presence of an egg-bearing cell available for transfer in the reservoir.

3. The method according to claim 1 or 2, wherein upon each cycle for filling a current tray, the egg receiving cells are moved in the reservoir (16) between a filling and storage zone, where eggs are deposited therein, and a transfer availability zone, where egg-bearing cells are put in place according to said reservoir configuration, the collecting of the available eggs thus prepared next being done automatically by a transfer plate controlled automatically to grasp them all simultaneously, move the set to the current tray, and release them all simultaneously to deposit them in said tray.

4. The method according to any one of claims 1 to 3, wherein eggs are periodically resupplied to the reservoir by transferring eggs collected from one of the successive trays assigned to that purpose to the empty cells of said reservoir.

5. The method according to any one of claims 1 to 4, wherein, upon each treatment cycle of a current tray, one alternates between a step of concentrating cells of the reservoir seeking to bring them back, alongside one another by rows of cells, toward a storage zone of the reservoir (46), and a step of distributing egg-bearing cells toward a transfer zone of the reservoir where they are placed automatically according to said reservoir configuration to transfer eggs that they bear to the tray (8) being stabilized.

6. The method according to the preceding claim, wherein in each row of concentrated cells placed side by side in said egg-bearing cell storage zone (46), a number of cells determined automatically for each row as a function of said reservoir configuration determined automatically in correspondence with the filling state of the tray to be filled is brought onwards a driving line for distribution to the transfer zone.

7. The method according to claim 5 or 6, further comprising a step of local redistribution of available eggs in the reservoir by collecting eggs present in the egg receiving cells belonging to a row of cells more provided with available eggs to deposit the eggs thus collected in empty cells occupying a row of cells less provided with available eggs, said more and less provided rows being determined automatically as a function of a count of the eggs they still contain after collecting of the eggs transferred to the current trays in previous tray filling cycles.

8. The method according to one of claims 5 to 7, wherein a need to resupply said reservoir (16) is determined automatically by comparing the number of available eggs in successive cells in series in each of said rows (R) with the number of empty egg locations respectively in each corresponding line of locations in the tray to be filled (C), and wherein, when such a need is observed, the filling of the successive trays is interrupted to periodically resupply the reservoir (16) by feeding it with eggs by transferring all of the eggs present in one of the traveling trays not yet treated by filling into the empty cells of said reservoir.

9. The method according to one of the preceding claims, wherein the tray configuration information defining a filling state of each traveling tray by the distribution between empty locations and full locations is obtained by specific sensor means dedicated to the filling step, positioned on the trays or in their path.

10. The method according to one of claims 1 to 8, wherein the filling of the successive traveling trays takes place after a prior step of inspecting the condition of the eggs and collecting eggs deemed non-valid from the trays, and wherein the filling state information for each traveling tray is provided automatically as a function of the distribution between empty locations and full locations known from the prior step.

11. A facility for filling traveling egg trays (8) including a stabilization unit by transferring eggs taken from elsewhere to be deposited in locations of each current tray detected as being empty, **characterized in that** it includes a reservoir of available eggs (16) in which cells (24) each receiving an egg are individually movable within the reservoir under the action of automatically controlled driving means (26) determining the distribution of available egg-bearing cells in a transfer zone (48) of the reservoir, a transfer plate (18) making up means for transferring eggs collected from said transfer zone (48) of said reservoir to a tray being stabilized (8) and depositing them in egg receiving locations of said tray, and a driving device, under automatically controlling, of said driving means of the cells to ensure the distribution of available egg-bearing cells in said transfer zone in a reservoir configuration established automatically as a function of the filling state of the current tray defining its configuration in terms of distribution of empty egg locations so as to have each full cell containing an available egg correspond to an empty egg location in said tray.

12. The facility according to claim 11, **characterized in that** the transfer means (18) consist of a suction plate including individual grasping means for grasping eggs that are distributed in as many lines and columns as each of said traveling trays (8) has egg locations.

13. The facility according to claim 11 or 12, **characterized in that** the egg receiving cells of the reservoir (16) are grouped together in rows (Rn) separate each other and each formed by cells (24) individually movable along the corresponding row under the effect of said driving means (26) associated with the reservoir.

14. The facility according to claim 13, **characterized in that** in each of said rows, the cells are mounted in series on a guide rail guiding their movements and **in that** in each series, they are alongside and against one another on said rail such they push themselves mutually along said rail when one of them is controlled to move.

15. The facility according to one of claims 13 and 14, **characterized in that** each said rows (Rn) include a number of movable cells (24) greater than the number of egg receiving locations (22) in each line (Cn) of the successive trays to be filled (8).

16. The facility according to claim 15, **characterized in that** in addition to said transfer zone (48) in which, during each filling cycle of a current tray, egg-bearing egg-bearing cellsare distributed in the configuration determined automatically as a function of the configuration of empty locations of the current tray, and eggs are grasped and collected from elsewhere than said cells thus distributed by said transfer means, said reservoir (16) includes a storage zone (46) for egg-bearing cells for the cells not used to fill the current tray.

17. The facility according to any one of claims 13 to 16, **characterized in that** said drive means (26) include a retractable teeth comb that is mounted movably along said rows of cells from one of their ends to the other across all of said rows, the teeth of the comb each being assigned to one of said rows of cells and individually controlled between an active position, driving a cell of the corresponding row with which it engages and an inactive position, where it withdraws away from the cells while the comb travels over all of the rows of cells.

18. The facility according to claim 17, **characterized in that** said comb is made in the form of an arm supporting jack devices (34) each bearing a finger consisting one of said retractable teeth of said comb.

19. The facility according to claim 17 or 18, **characterized in that** each movable cell of the reservoir has a driving tab (32) with which the corresponding comb tooth engages when it is deployed in the active position to move it in one direction or the other along a guide rail of the cells in series in the same row.

20. The facility according to one of claims 13 to 18, **characterized in that** it further includes a arm for eggs local transfer between different cells within said reservoir, said arm for local transfer being controlled automatically to collect eggs present in cells of a row automatically determined as being more provided with eggs and to deposit them in empty cells in a row automatically determined as being less provided with eggs.

21. The facility according to any one of the preceding facility claims combined with claim 17, **characterized in that** it includes means for controlling said cell driving means configured to control the driving of said comb in a translational movement back and forth along said rows of cells traveling over the cells of the different rows of the reservoir, and to control the teeth of the comb so that each one, over the corresponding row, engages alternatively either with a last of the cells to be moved when the comb moves in the first direction to distribute the egg-bearing cells in a transfer zone of the cells filling the current tray, or with a first of the cells that have thus been emptied of their eggs in the first direction (including those which were already empty), when the comb is moved in the opposite direction towards a storage zone for the egg-bearing cells from which, upon each filling cycle of a tray, the cells to be distributed for transfer are removed, in a number that is determined in each row automatically as a function of said reservoir configuration to be respected.

22. The facility according to claim 21, **characterized in that** it includes means for automatically determining when to resupply the reservoir with eggs, as well as means for then controlling said driving means of the comb and controlling its teeth in order, during the movement of the comb in said first direction of its back-and-forth movement, to distribute the empty cells in said transfer zone in accordance with a configuration determined to correspond to the configuration of full locations of the current tray that is then assigned to the resupply, as well as means for next controlling the egg transfer means so as to grasp the eggs present in said tray and deposit them in the empty cells that have been arranged in the transfer zone.
